# FASCICULE DE BREVET EUROPEEN

(11) **EP 3 064 313 B1**
(45) Date de publication et mention de la délivrance du brevet: **11.04.2018**
(21) Numéro de dépôt: 16157411.6
(22) Date de dépôt: 25.02.2016
(51) Int. Cl.: B23Q 1/01, B23Q 9/00, B64F 5/00

(54) **PORTE-OUTIL FIXÉ SUR UNE PIÈCE**
WERKZEUGHALTER, DER AUF EINEM WERKZEUG BEFESTIGT IST
TOOL HOLDER SECURED TO A WORKPIECE

(30) Priorité: 02.03.2015 FR 1551721
(43) Date de publication de la demande: 07.09.2016
(73) Titulaire: Airbus Operations (S.A.S.), 31060 Toulouse Cedex 9 (FR)
(72) Inventeur: ALBERT, Fabien, 31000 TOULOUSE (FR)
(74) Mandataire: Coudray, Pascal André Alain

(56) Documents cités:
- EP-A1- 2 674 244
- EP-A2- 2 258 515
- US-A- 5 588 418
- US-A1- 2003 116 331
- US-A1- 2005 265 798
- US-A1- 2008 083 128

## Description

### DOMAINE TECHNIQUE

La présente invention concerne un porte-outil permettant de rendre mobile en translation sur une pièce, un outil qu'il porte. Un tel porte-outil peut être utilisé en particulier dans le cadre de la construction d'un aéronef.

### ETAT DE LA TECHNIQUE ANTERIEURE

La construction d'un fuselage d'aéronef est réalisée par assemblage de panneaux qui sont rivetés les uns aux autres. Un tel assemblage nécessite au moins trois opérations successives qui sont le perçage, la mise en place du rivet et le contrôle du rivet ainsi mis en place.

Ces différentes opérations sont réalisées à l'aide de différents outils qui sont souvent encombrants et peu modulables, ce qui rend, en particulier, leurs utilisations et leurs maintenances assez complexes.

Un porte-outil d'après le préambule de la revendication 1 est connu du document US2005/0265798.

### EXPOSE DE L'INVENTION

Un objet de la présente invention est de proposer un porte-outil qui ne présente pas les inconvénients de l'art antérieur et qui en particulier est simple à mettre en oeuvre et dont la conception facilite les opérations de maintenance.

A cet effet, est proposé un porte-outil destiné à se fixer sur une surface d'une pièce et à porter un outil, ledit porte-outil comportant :
- un premier rail et un deuxième rail parallèles et comportant chacun des premiers éléments de fixation configurés pour assurer la fixation dudit rail sur la surface,
- un coulisseau menant comportant des premiers éléments de guidage qui présentent une position de guidage dans laquelle lesdits premiers éléments de guidage sont configurés pour assurer une liaison glissière entre le coulisseau menant et le premier rail, un système d'entraînement configuré pour assurer le déplacement du coulisseau menant le long du premier rail, et un premier système de fixation,
- un coulisseau mené comportant des deuxièmes éléments de guidage qui présentent une position de guidage dans laquelle lesdits deuxièmes éléments de guidage sont configurés pour assurer une liaison glissière entre le coulisseau mené et le deuxième rail et un deuxième système de fixation,
- une barre d'assemblage dont une première extrémité porte un premier système complémentaire de fixation destiné à coopérer avec le premier système de fixation de manière à former une fixation amovible entre eux, dont une deuxième extrémité porte un deuxième système complémentaire de fixation destiné à coopérer avec le deuxième système de fixation de manière à former une fixation amovible entre eux, et un chariot présentant un premier système d'assemblage, et un système de déplacement sur lequel le chariot est fixé et qui est configuré pour déplacer ledit chariot le long de la barre d'assemblage, et
- un module de support comportant des deuxièmes éléments de fixation assurant la fixation de l'outil, et un deuxième système d'assemblage destiné à coopérer avec le premier système d'assemblage de manière à former une fixation amovible entre eux,
où chacun des premier et deuxième éléments de guidage comportent au moins trois roues à gorge, dont au moins deux sont disposées le long d'un premier bord longitudinal du premier rail, respectivement deuxième rail, et dont au moins une est disposée le long d'un deuxième bord longitudinal du premier rail, respectivement deuxième rail,
où pour chacun des premier et deuxième éléments de guidage, au moins un groupe parmi lesdites au moins deux roues à gorges ou ladite au moins une roue à gorge est déplaçable de la position de guidage à une position de libération dans laquelle ledit au moins un groupe est à distance du rail, et où le coulisseau correspondant comporte un système d'actionnement configuré pour assurer le passage dudit au moins un groupe de la position de guidage à la position de libération, et inversement,
où pour chacun des premier et deuxième éléments de guidage, le système d'actionnement comporte une poignée pouvant être déplacée d'une position de verrouillage à une position de déverrouillage et, pour les roues à gorge déplaçables, un système de décalage mobile entre une position de guidage dans laquelle lesdites roues à gorge sont en position de guidage et une position de libération dans laquelle lesdites roues à gorge sont en position de libération, et un système de transmission configuré pour commander le passage du système de décalage de la position de guidage à la position de libération lorsque la poignée est manoeuvrée de la position de verrouillage à la position de déverrouillage et inversement, et
le porte-outil étant caractérisé en ce que pour l'un des premier et deuxième éléments de guidage, la poignée prend la forme d'une gâchette, le système de transmission prend la forme d'un câble reliant la gâchette au système de décalage, et le système de décalage comporte :
- un actionneur avec une tige,
- un bras de décalage présentant une première extrémité reliée au câble et sur laquelle l'actionneur est monté mobile en rotation, et une deuxième extrémité montée mobile en rotation sur le châssis,
- un premier bras monté mobile en rotation sur le châssis et articulé sur la tige,
- un deuxième bras dont l'une des extrémités est montée articulée sur le premier bras, et
- un troisième bras monté mobile en rotation sur le châssis et portant la roue à gorge, et où l'autre extrémité du deuxième bras est montée articulée sur le troisième bras.

Un tel porte-outil modulaire est donc facilement assemblable ce qui facilite sa mise en oeuvre et les opérations de maintenance.

Avantageusement, pour l'autre des premier et deuxième éléments de guidage, la poignée est un bouton rotatif, le système de transmission est un arbre mobile en rotation autour de son axe, dit axe de transmission, solidaire du bouton rotatif et du deuxième système de décalage, et le système de décalage comporte :
- un premier moyeu mobile en rotation sur le châssis et fixé à l'arbre et dont l'axe de rotation est désaxé par rapport à son centre et confondu avec l'axe de transmission, la roue à gorge étant montée mobile en rotation sur le premier moyeu,
- un deuxième moyeu mobile en rotation sur le châssis et dont l'axe de rotation est désaxé par rapport à son centre, la roue à gorge étant montée mobile en rotation sur le deuxième moyeu,
- un arbre fixe autour duquel le deuxième moyeu est monté mobile en rotation, et
- une bielle dont la première extrémité est montée mobile en rotation sur le premier moyeu autour d'un axe parallèle à l'axe de transmission, et dont la deuxième extrémité est montée mobile en rotation sur le deuxième moyeu autour d'un axe parallèle à l'axe de transmission.

Avantageusement, le deuxième rail présente des fentes, le coulisseau mené comporte une dent et un système de sécurité qui est configuré pour assurer, lorsque la barre d'assemblage est libérée dudit coulisseau mené, l'insertion de la dent dans une fente et assurer, lorsque la barre d'assemblage est fixée audit coulisseau mené ou lorsqu'un technicien l'active volontairement, l'extraction de la dent de la fente.

Avantageusement, le système de sécurité comporte :
- un arbre de sécurité monté mobile en rotation sur le coulisseau mené autour d'un axe parallèle au plan du deuxième rail,
- un levier fixé sur l'arbre de sécurité dont une première extrémité est saillante par rapport au coulisseau mené et une deuxième extrémité sur laquelle la dent est articulée,
- un moyen de rappel qui contraint le levier dans la position où la première extrémité est saillante par rapport au coulisseau mené, et
- une poignée de sécurité fixée sur l'arbre de sécurité.

Avantageusement, au moins un parmi le premier ou le deuxième système de fixation comporte un plot avec une tête dont l'axe est perpendiculaire au plan du rail, et le premier, respectivement le deuxième, système complémentaire de fixation comporte un système d'accrochage qui comporte :
- deux mâchoires, chacune étant montée mobile en rotation sur le châssis autour d'un axe de serrage parallèle au plan du rail entre une position de serrage dans laquelle les mâchoires enserrent la tête et une position libre dans laquelle les mâchoires libèrent la tête,
- pour chaque mâchoire, un moyen de rappel qui contraint ladite mâchoire en position de serrage, et
- un système de libération configuré pour faire passer les deux mâchoires de la position de serrage à la position libre.

Avantageusement, au moins un parmi le premier ou le deuxième système de fixation comporte une pluralité d'orifices et une tige filetée dont les axes sont parallèles à la direction du rail, et le premier, respectivement le deuxième, système complémentaire de fixation comporte :
- pour chaque orifice, une protubérance prévue pour s'insérer dans l'orifice, et
- un trou taraudé prévu pour recevoir la tige filetée.

Avantageusement, la pluralité d'orifices et la tige filetée sont disposées sur un plateau qui est monté mobile en translation sur le coulisseau selon une direction perpendiculaire à la direction longitudinale du rail et parallèle au plan du rail.

Avantageusement, le chariot comporte une base fixée sur le système de déplacement, un support mobile monté mobile en rotation sur la base autour d'un axe outil parallèle à la direction longitudinale de la barre d'assemblage, des moyens d'arrêt permettant de bloquer la rotation du support mobile, et le premier système d'assemblage arrangé sur le support mobile.

Avantageusement, le module support comporte une base portant le deuxième système d'assemblage, un tiroir monté mobile en translation sur la base selon une direction perpendiculaire au plan des rails, des moyens d'actionnement assurant un déplacement du tiroir sur la base, et les deuxièmes éléments de fixation sont disposés sur le tiroir.

Avantageusement, le module support comporte une base, un tiroir et des moyens d'actionnement assurant un déplacement en translation du tiroir sur la base selon une direction perpendiculaire au plan des rails.

Avantageusement, le module support comporte deux capteurs de pression alignés l'un avec l'autre selon la direction longitudinale des rails, les capteurs de pression sont montés sur un coulisseau monté sur ressort et mobile en translation sur le tiroir selon une direction perpendiculaire au plan des rails. Lesdits capteurs de pression permettant d'identifier le décalage angulaire entre l'outil et la surface de la pièce. Le porte-outil comporte une unité de contrôle qui commande le système d'entraînement et les moyens d'actionnement et qui reçoit des informations des deux capteurs de pression.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue en perspective d'un porte-outil selon l'invention,
la Fig. 2 montre une vue en perspective d'un coulisseau menant du porte-outil de la Fig. 1,
la Fig. 3A montre une vue de dessous du coulisseau menant de la Fig. 2,
la Fig. 3B montre un détail de la vue du dessous du coulisseau menant,
la Fig. 4A montre une vue en perspective d'un coulisseau mené du porte-outil de la Fig. 1,
la Fig. 4B montre un détail du coulisseau mené de la Fig. 4A,
la Fig. 4C montre une coupe du coulisseau mené de la Fig. 4A par le plan 4C de la Fig. 4A,
la Fig. 5A montre une vue de dessous du coulisseau mené de la Fig. 4A,
la Fig. 5B montre un détail de la vue du dessous du coulisseau mené,
la Fig. 6 montre une barre d'assemblage vue selon la flèche VI de la Fig. 1,
la Fig. 7 montre un détail de la barre d'assemblage de la Fig. 6 vu selon la flèche VII,
la Fig. 8A montre la barre d'assemblage vue selon la flèche VIII de la Fig. 1,
la Fig. 8B montre une coupe de la barre d'assemblage selon la ligne 8B-8B de la Fig. 8A,
la Fig. 9 montre une vue en perspective d'un module de support du porte-outil de la Fig. 1,
la Fig. 10 montre une vue de dessous du module de support, et
la Fig. 11 montre une coupe selon la ligne XI-XI de la Fig. 8A.

### EXPOSE DETAILLE DE MODES DE REALISATION

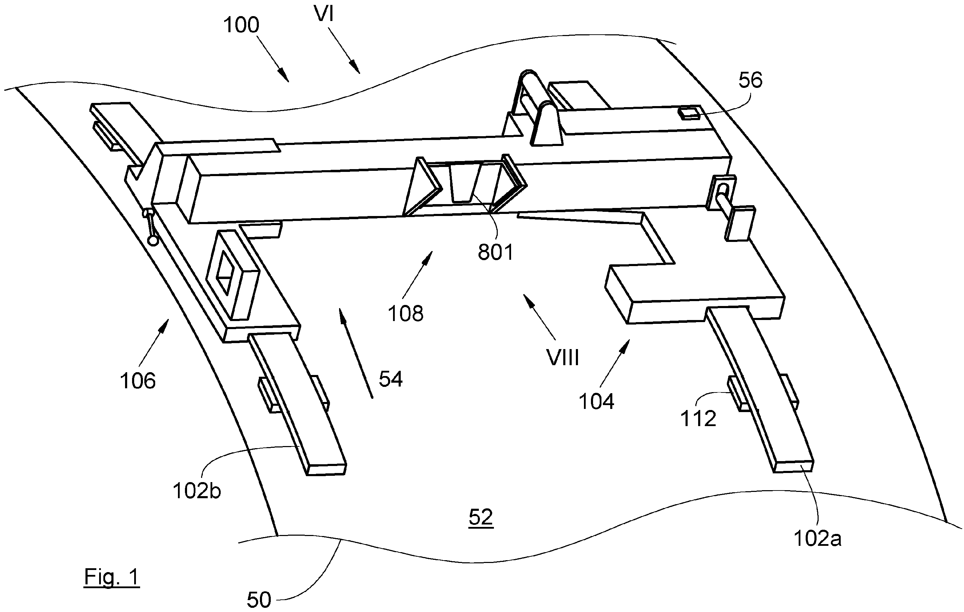

Dans la description qui suit, les termes relatifs à une position sont pris en référence à un porte-outil disposé sur une surface d'une pièce à travailler, c'est-à-dire comme il est représenté sur la Fig. 1.

La Fig. 1 montre un porte-outil 100 qui est positionné et fixé sur une surface 52 d'une pièce 50 devant subir un traitement particulier à l'aide d'un outil porté par ledit porte-outil 100. Le traitement peut être par exemple le perçage de la pièce 50, la pose d'un insert, .... L'outil mis en place est alors adapté à ce traitement.

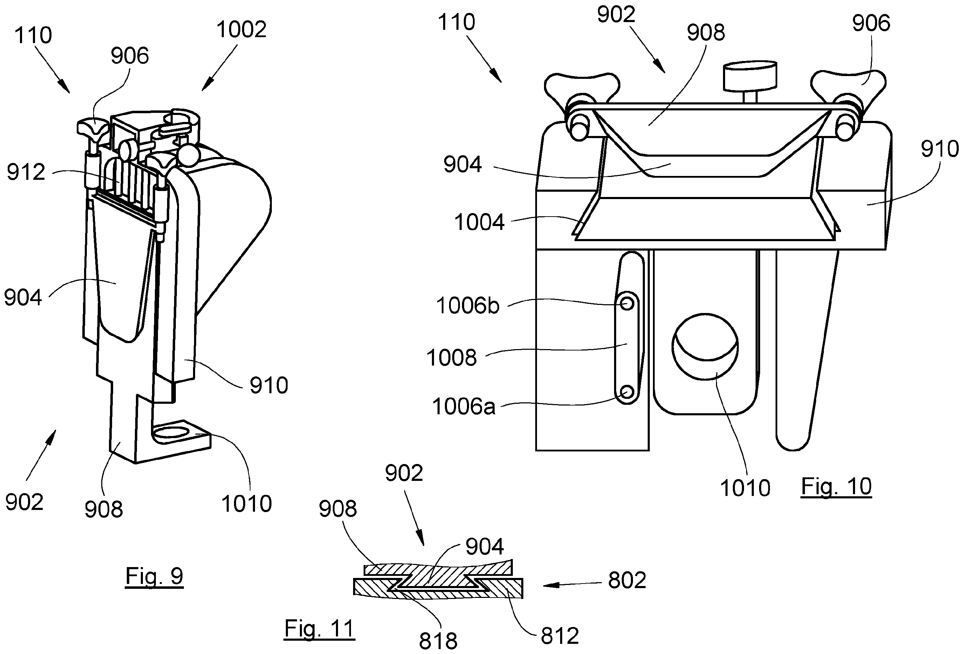

Le porte-outil 100 comporte:
- un premier rail 102a et un deuxième rail 102b parallèles et comportant chacun des premiers éléments de fixation 112 configurés pour assurer la fixation dudit rail 102a-b sur la surface 52,
- un coulisseau menant 104,
- un coulisseau mené 106,
- une barre d'assemblage 108, et
- un module de support 110 (non représenté sur la Fig. 1, cf. Figs. 9 et 10).

Dans la mesure où le porte-outil 100 est plus particulièrement prévu pour être mis en oeuvre sur une surface extérieure d'un fuselage d'aéronef, les rails 102a-b présentent chacun une souplesse et une courbure appropriées pour s'appliquer sur une telle surface extérieure courbe. Dans la suite de la description, on appelle 'plan des rails', la surface qui est parallèle à la surface 52 de la pièce 50. Le plan des rails peut alors être plat dans le cas d'une surface 52 plane ou courbe dans le cas d'une surface 52 courbe.

La direction longitudinale des rails 102a-b est représentée par la flèche 54. Si la surface 52 est plane, la direction longitudinale des rails 102a-b prend la forme d'une droite parallèle à ladite surface 52, et si la surface 52 est courbe, la direction longitudinale des rails 102a-b prend la forme d'une courbe parallèle à ladite surface 52.

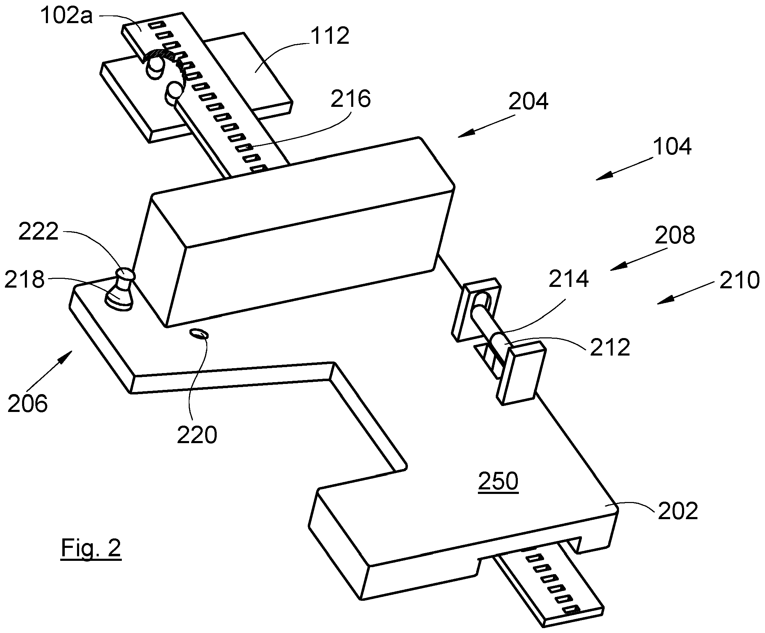

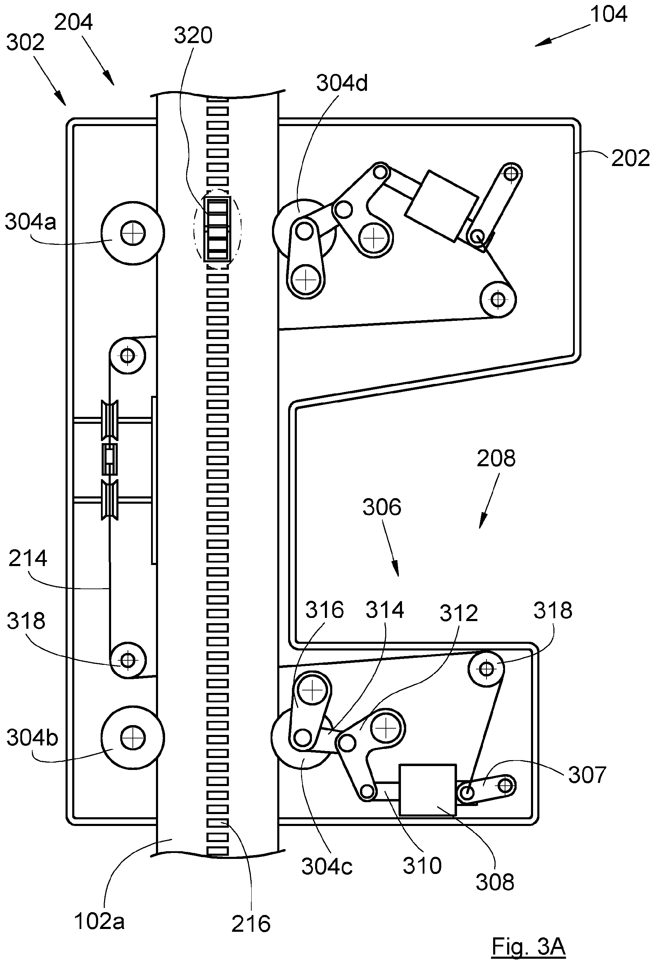

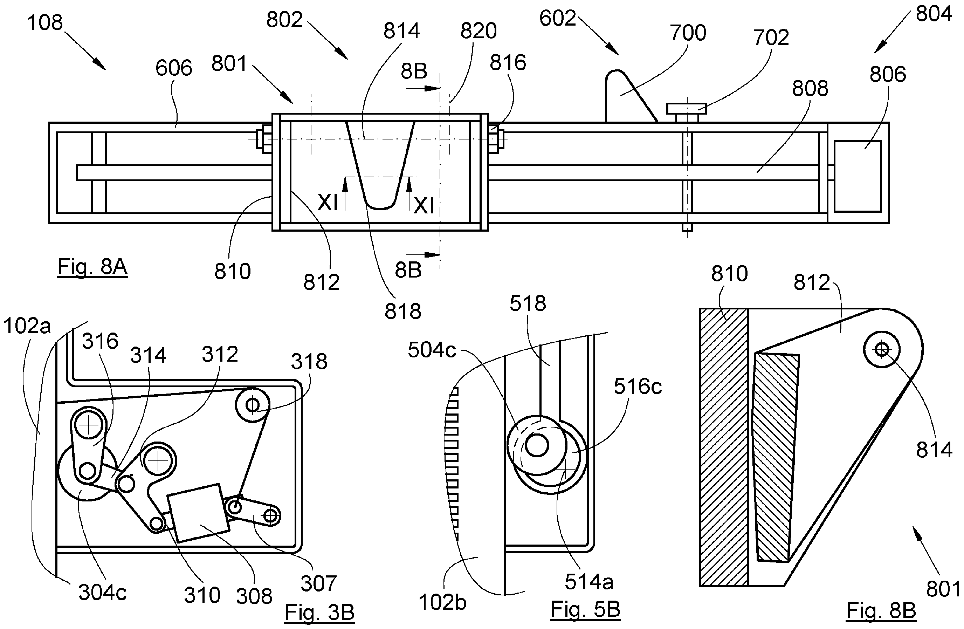

La Fig. 2 et les Figs. 3A et 3B montrent le coulisseau menant 104 monté sur le premier rail 102a et qui comporte :
- un châssis 202 portant des premiers éléments de guidage 302 présentant une position de guidage dans laquelle les premiers éléments de guidage 302 sont configurés pour assurer une liaison glissière entre le coulisseau menant 104 et le premier rail 102a,
- un système d'entraînement 204 configuré pour assurer le déplacement du coulisseau menant 104 le long du premier rail 102a, et
- un premier système de fixation 206 dont le fonctionnement est décrit ci-après.

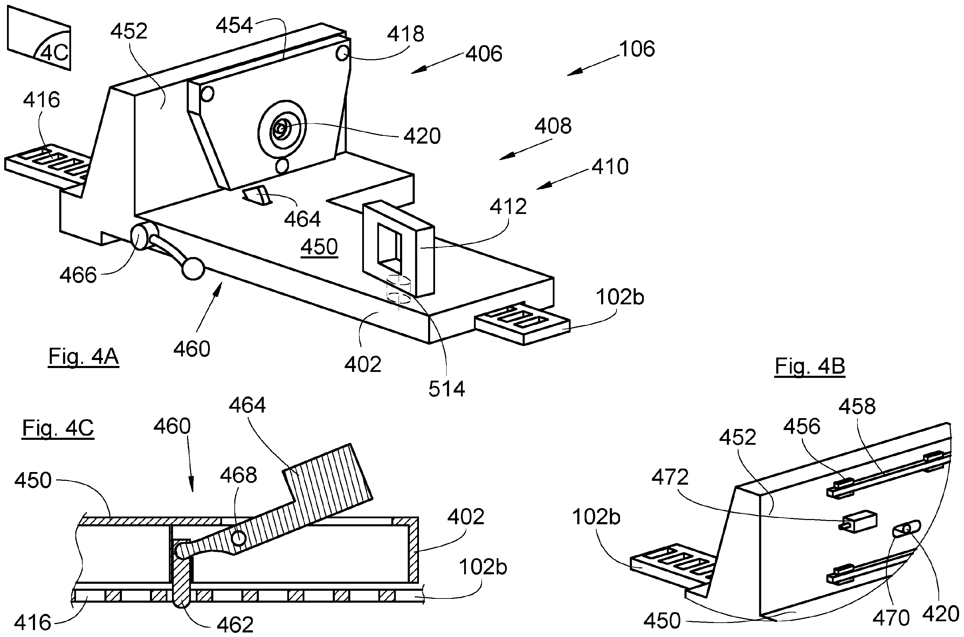

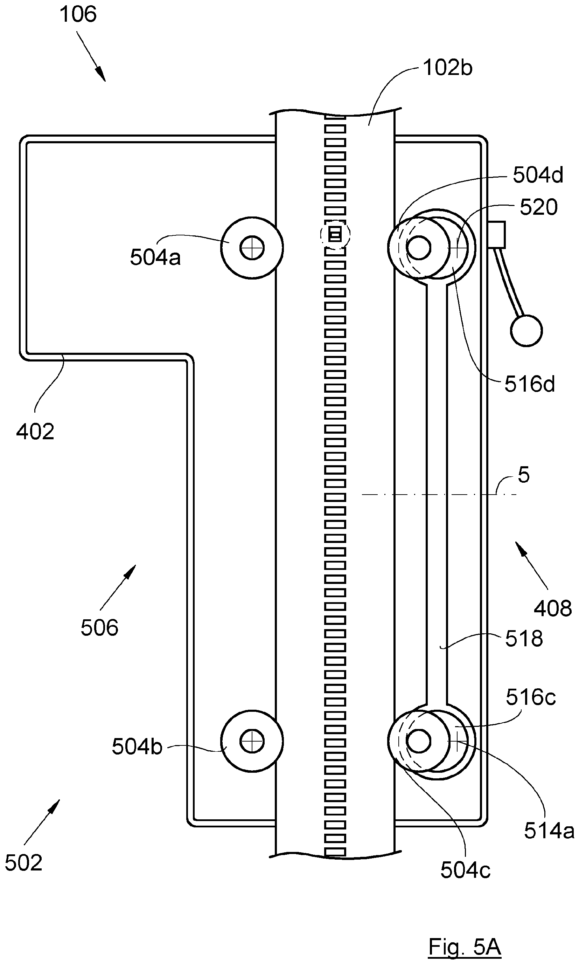

La Fig. 4A-C et les Figs. 5A-B montrent le coulisseau mené 106 monté sur le deuxième rail 102b et qui comporte :
- un châssis 402 portant des deuxièmes éléments de guidage 502 présentant une position de guidage dans laquelle les deuxièmes éléments de guidage 502 sont configurés pour assurer une liaison glissière entre le coulisseau mené 106 et le deuxième rail 102b et
- un deuxième système de fixation 406 dont le fonctionnement est décrit ultérieurement avec la barre d'assemblage 108.

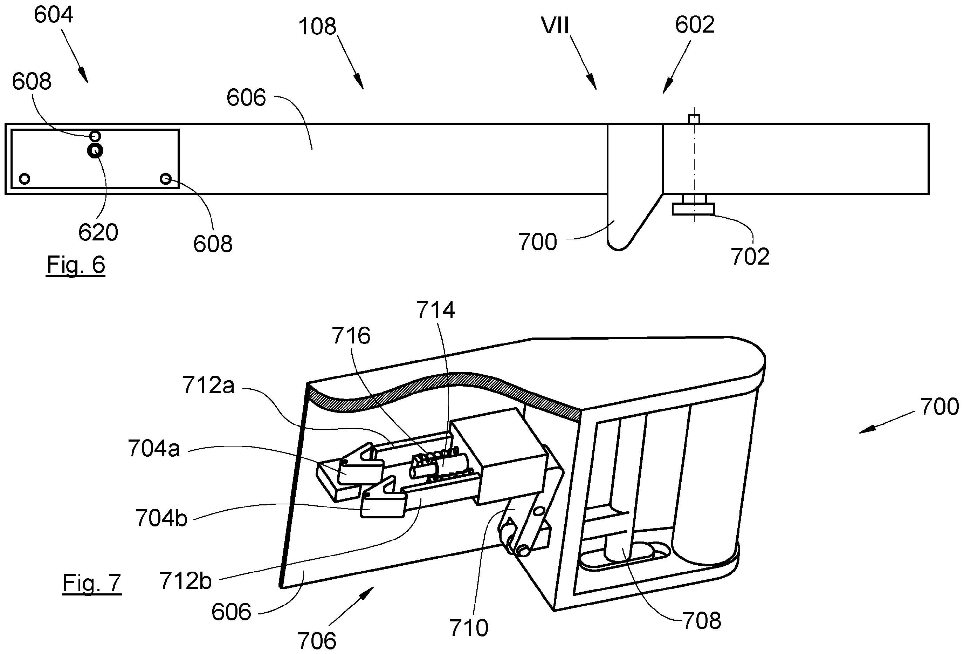

Les Figs. 6, 7 et 8A-B montrent la barre d'assemblage 108 qui comporte un châssis 606 de forme allongée dont une première extrémité porte un premier système complémentaire de fixation 602 destiné à coopérer avec le premier système de fixation 206 de manière à former une fixation amovible entre eux, dont une deuxième extrémité porte un deuxième système complémentaire de fixation 604 destiné à coopérer avec le deuxième système de fixation 406 de manière à former une fixation amovible entre eux, et un chariot 801 monté mobile en translation le long du châssis 606 de la barre d'assemblage 108 et présentant un premier système d'assemblage 802.

Les Figs. 9 et 10 montrent le module de support 110 comportant des deuxièmes éléments de fixation 1002 assurant la fixation de l'outil sur le module de support 110, et un deuxième système d'assemblage 902 destiné à coopérer avec le premier système d'assemblage 802 de manière à former une fixation amovible entre eux.

On dit qu'une première pièce est montée de manière amovible sur une deuxième pièce lorsque la première pièce peut être détachée de la deuxième pièce sans que l'une ou l'autre des pièces soit détériorée.

La modularité du porte-outil 100 facilite son montage et démontage, ainsi que la vérification de chaque élément constituant le porte-outil 100 indépendamment des autres et son éventuelle restauration ou remplacement.

Les premiers éléments de fixation 112 sont par exemple des ventouses réparties le long de chaque rail 102a-b et qui s'appliquent sur la surface 52. Les premiers éléments de fixation 112 peuvent être également une série d'aimants solidaires de chaque rail 102a-b lorsque la pièce 50 est métallique.

Le système d'entraînement 204 comporte un moteur électrique et une roue dentée 320 (vue sur la coupe partielle de la Fig. 3A) qui est entraînée en rotation autour d'un axe rotatif par le moteur et qui engrène avec des fentes 216 du premier rail 102a. L'axe rotatif est parallèle au plan du premier rail 102a et perpendiculaire à la direction longitudinale du premier rail 102a. Ainsi, lorsque le moteur est activé, la roue dentée 320 tourne et ses dents engrènent avec les fentes 216 pour déplacer le coulisseau menant 104 dans un sens ou dans l'autre selon le sens de rotation du moteur.

Les premiers 302 et deuxièmes 502 éléments de guidage sont constitués ici de quatre roues à gorge 304a-d, respectivement 504a-d, dont deux sont disposées le long d'un premier bord longitudinal du premier rail 102a, respectivement deuxième rail 102b, et dont deux sont disposées le long d'un deuxième bord longitudinal du premier rail 102a, respectivement deuxième rail 102b. Chaque bord longitudinal du rail 102a-b se positionne dans le fond des gorges des roues à gorge 304a-d, 504a-d correspondantes qui enserrent ainsi le rail 102a-b, assurant ainsi la création d'une liaison glissière et empêchant la séparation du coulisseau 104, 106 du rail 102a-b. Chaque roue à gorge 304a-d, 504a-d est mobile en rotation autour de son axe.

Dans la mesure où les rails 102a-b peuvent être courbes, l'axe de rotation de chaque roue à gorge 304a-d, 504a-d est orienté de manière à assurer la rotation desdites roues à gorge 304a-d, 504a-d et le suivi des rails 102a-b par lesdites roues à gorge 304a-d, 504a-d lors des déplacements des coulisseaux menant 104 et mené 106 le long des rails 102a-b courbés.

D'une manière plus générale, les premiers 302 et deuxièmes 502 éléments de guidage comportent au moins trois roues à gorge 304a-d, 504a-d, dont au moins deux sont disposées le long d'un premier bord longitudinal du premier rail 102a, respectivement deuxième rail 102b, et dont au moins une est disposée le long d'un deuxième bord longitudinal du premier rail 102a, respectivement deuxième rail 102b.

Dans un autre mode de réalisation non représenté, les premiers et les deuxièmes éléments de guidage comportent une rainure parallèle au rail 102a-b et dans lequel le bord dudit rail 102a-b s'insère et, dans le fond de la rainure, une succession de rouleaux à axe perpendiculaire audit rail 102a-b et contre lesquels roule ledit bord.

Les premiers éléments de guidage 302 sont disposés ici sous un fond 250 du coulisseau menant 104 qui s'étend dans un plan localement parallèle au plan du premier rail 102a. Les deuxièmes éléments de guidage 502 sont disposés ici sous un fond 450 du coulisseau mené 106 qui s'étend dans un plan localement parallèle au plan du deuxième rail 102b.

La mise en place du coulisseau menant 104 et du coulisseau mené 106 peut s'effectuer par leurs mises en place au niveau des extrémités du premier rail 102a et du deuxième rail 102b et coulissement de chaque coulisseau 104, 106 jusqu'à la position souhaitée.

Pour faciliter cette mise en place, les premiers éléments de guidage 302 sont déplaçables de la position de guidage à une position de libération dans laquelle ils n'assurent pas la liaison glissière et permettent de séparer le coulisseau menant 104 du premier rail 102a. Dans la position de libération, les premiers éléments de guidage 302 sont à distance du bord du premier rail 102a. A cette fin, le coulisseau menant 104 comporte un premier système d'actionnement 208 configuré pour assurer le passage des premiers éléments de guidage 302 de la position de guidage à la position de libération, et inversement. La Fig. 3B montre la roue à gorge 304c en position de libération où elle est désengagée du bord longitudinal du premier rail 102a.

De la même manière, les deuxièmes éléments de guidage 502 sont déplaçables de la position de guidage à une position de libération dans laquelle ils n'assurent pas la liaison glissière et permettent de séparer le coulisseau mené 106 du deuxième rail 102b. Dans la position de libération, les deuxièmes éléments de guidage 502 sont à distance du bord du deuxième rail 102b. A cette fin, le coulisseau mené 106 comporte un deuxième système d'actionnement 408 configuré pour assurer le passage des deuxièmes éléments de guidage 502 de la position de guidage à la position de libération, et inversement. La Fig. 5B montre la roue à gorge 504c en position de libération où elle est désengagée du bord longitudinal du deuxième rail 102b.

Pour dégager le rail 102a-b de l'emprise des roues à gorge 304a-d, 504a-d, les Figs. 3A-B et les Fig. 5A-B montrent que les roues à gorge 304c-d, 504c-d qui sont le long d'un même bord longitudinal du rail 102a-b s'écartent dudit rail 102a-b afin de libérer ledit bord longitudinal. Bien sûr, il est possible de prévoir que toutes les roues à gorge 304a-d, 504a-d s'écartent de chacun des bords longitudinaux.

D'une manière générale, pour assurer le passage de la position de guidage à la position de libération, au moins un groupe parmi lesdites au moins deux roues à gorge ou ladite au moins une roue à gorge est déplaçable de la position de guidage à la position de libération dans laquelle ledit au moins un groupe est à distance du rail et ainsi n'assure pas la liaison glissière et permet de séparer le coulisseau menant 104, respectivement mené 106, du premier rail 102a, respectivement deuxième rail 102b, en dégageant le rail 102a-b de la gorge. Le premier système d'actionnement 208 est ainsi configuré pour assurer le passage dudit au moins un groupe de la position de guidage à la position de libération, et inversement, et le deuxième système d'actionnement 408 est ainsi configuré pour assurer le passage dudit au moins un groupe de la position de guidage à la position de libération, et inversement.

Le premier 208 et le deuxième 408 systèmes d'actionnement comportent une première 210, respectivement deuxième 410, poignée pouvant être déplacée par un utilisateur d'une position de verrouillage à une position de déverrouillage et, pour les roues à gorge 304c-d, 504c-d déplaçables, un premier 306, respectivement deuxième 506, système de décalage mobile entre une position de guidage dans laquelle lesdites roues à gorge 304c-d, 504c-d sont en position de guidage et une position de libération dans laquelle lesdites roues à gorge 304c-d, 504c-d sont en position de libération, et un premier 214, respectivement deuxième 514, système de transmission configuré pour commander le passage du premier 306, respectivement deuxième 506, système de décalage de la position de guidage à la position de libération lorsque la première 210, respectivement deuxième 410, poignée est manoeuvrée de la position de verrouillage à la position de déverrouillage et inversement.

La première poignée 210 prend ici la forme d'une gâchette 212 mobile en translation dans un plan perpendiculaire au plan du premier rail 102a et guidée par des glissières prévues à cet effet dans le châssis 202.

La deuxième poignée 410 prend la forme d'un bouton rotatif 412 mobile en rotation autour d'un axe perpendiculaire au plan du deuxième rail 102b.

Le premier système de transmission 214 prend la forme d'un câble reliant la gâchette 212 audit premier système de décalage 306.

Le deuxième système de transmission 514 prend la forme d'un arbre (en pointillés sur la Fig. 4A) solidaire, d'une part, du bouton rotatif 412, et, d'autre part, du deuxième système de décalage 506. L'arbre 514 est mobile en rotation autour de son axe représenté sur les Figs. 5A-B et dit axe de transmission 514a, qui est perpendiculaire au plan du deuxième rail 102b.

Dans le mode de réalisation de l'invention tel qu'il est représenté sur les Figs. 3A-B, le premier système de décalage 306 est composé de deux ensembles similaires qui comportent chacun ici :
- un actionneur 308 avec une tige 310, par exemple un vérin pneumatique,
- un bras de décalage 307 présentant une première extrémité reliée au câble 214 et sur laquelle l'actionneur 308 est monté mobile en rotation, et une deuxième extrémité montée mobile en rotation sur le châssis 202,
- un premier bras 312 monté mobile en rotation sur le châssis 202 et articulé sur la tige 310,
- un deuxième bras 314 dont l'une des extrémités est montée articulée sur le premier bras 312, et
- un troisième bras 316 monté mobile en rotation sur le châssis 202 et portant la roue à gorge 304c, et où l'autre extrémité du deuxième bras 314 est montée articulée sur le troisième bras 316.

Lorsque l'actionneur 308 est activé, par exemple sous pression d'air pour un vérin pneumatique, la position de la tige 310 est verrouillée, ce qui contraint la roue à gorge 304c en position de guidage contre le rail 102a.

Lorsque l'actionneur 308 n'est pas activé, la position de la tige 310 est alors lâche, et un actionnement de la gâchette 212 va tirer sur le câble 214 qui déplace en rotation le bras de décalage 307 et donc l'actionneur 308 et sa tige 310 ainsi que les bras 312, 314 et 316 de manière à placer la roue à gorge 304c en position de libération comme cela est représenté sur la Fig. 3B. A l'inverse, lorsque la gâchette 212 est relâchée, un moyen de rappel, du type ressort de torsion, ramène ladite gâchette 212 dans sa position initiale. Le retour de la gâchette 212 dans sa position initiale entraîne un retour du bras de décalage 307 dans sa position initiale (Fig. 3A) où une activation de l'actionneur 308 verrouille à nouveau la roue à gorge 304c en position de guidage.

Le cheminement du câble 214 de la gâchette 212 à l'actionneur 308 s'effectue à l'aide d'une série de poulies 318.

Dans le mode de réalisation de l'invention tel qu'il est représenté sur les Figs. 5A-B, il y a deux roues à gorge 504c-d mobiles et le deuxième système de décalage 506 comporte un plan de symétrie (représenté par la ligne référencée 5 sur la Fig. 5A) qui est le plan médian entre les deux roues à gorge 504c-d qui est perpendiculaire à la direction longitudinale du deuxième rail 102b.

Le deuxième système de décalage 506 comporte :
- un premier moyeu 516c mobile en rotation sur le châssis 402, le premier moyeu 516c est fixé à l'arbre 514 constituant le deuxième système de transmission 514 et l'axe de rotation est désaxé par rapport à son centre et confondu avec l'axe de transmission 514a, la roue à gorge 504c étant montée mobile en rotation sur le premier moyeu 516c,
- un deuxième moyeu 516d qui est symétrique du premier moyeu 516c par rapport au plan de symétrie 5, le deuxième moyeu 516d est mobile en rotation sur le châssis 402 et l'axe de rotation est désaxé par rapport à son centre, la roue à gorge 504d étant montée mobile en rotation sur le deuxième moyeu 516d,
- un arbre fixe 520 dont l'axe est symétrique de l'axe de transmission 514a par rapport au plan de symétrie 5 et autour duquel le deuxième moyeu 516d est monté mobile en rotation, et
- une bielle 518 dont la première extrémité est montée mobile en rotation sur le premier moyeu 516c autour d'un axe parallèle à l'axe de transmission 514a, et dont la deuxième extrémité est montée mobile en rotation sur le deuxième moyeu 516d autour d'un axe parallèle à l'axe de transmission 514a.

La rotation du bouton rotatif 412 va entraîner la rotation de l'arbre 514 autour de son axe de transmission 514a et la rotation du premier moyeu 516c et l'escamotage de la roue à gorge 504c, et dans le même temps le déplacement de la bielle 518 va entraîner la rotation du deuxième moyeu 516d autour de l'arbre fixe 520 et l'escamotage de la roue à gorge 504d. La rotation du bouton rotatif 412 dans le sens inverse va remettre les roues à gorge 504c-d dans leurs positions d'origine.

Lorsque le moteur du système d'entraînement 204 ne reçoit aucun ordre d'activation ou n'est pas alimenté électriquement, il ne tourne pas assurant ainsi le blocage en translation du coulisseau menant 104 par le fait qu'une dent de la roue dentée 320 est insérée dans une fente 216. La poignée, le système de décalage et le système de transmission peuvent être inversés entre le premier et deuxième éléments de guidage.

Pour assurer le blocage du coulisseau mené 106 lorsque la barre d'assemblage 108 n'est pas en place, le deuxième rail 102b présente des fentes 416 et le coulisseau mené 106 comporte une dent 462 et un système de sécurité 460 qui est configuré pour assurer, lorsque la barre d'assemblage 108 est libérée dudit coulisseau mené 106, l'insertion de la dent 462 dans une fente 416 et ainsi le blocage en translation du coulisseau mené 106, et assurer, lorsque la barre d'assemblage 108 est fixée audit coulisseau mené 106 ou lorsqu'un technicien l'active volontairement, l'extraction de la dent 462 de la fente 416 et ainsi la liberté de déplacement en translation du coulisseau mené 106.

Un mode de réalisation particulier du système de sécurité 460 va être expliqué à partir des Figs. 4A et 4C. La dent 462 est montée mobile en translation sur le châssis 402, et plus particulièrement sous le fond 450 selon une direction perpendiculaire au plan du deuxième rail 102b.

Le système de sécurité 460 comporte un arbre de sécurité 468 monté mobile en rotation sur le châssis 402 du coulisseau mené 106 autour d'un axe localement parallèle au plan du deuxième rail 102b et un levier 464 fixé sur l'arbre de sécurité 468. Le levier 464 présente une première extrémité saillante par rapport au fond 450 du coulisseau mené 106 et une deuxième extrémité sur laquelle la dent 462 est articulée, ainsi lorsque la barre d'assemblage 108 est mise en place, elle appuie sur la première extrémité, entraînant le basculement du levier 464 et le soulèvement de la deuxième extrémité et de la dent 464 qui sort de la fente 416.

Pour assurer un retour automatique de la dent 464 dans une fente 416 lors du retrait de la barre d'assemblage 108, le système de sécurité 460 comporte un moyen de rappel comme par exemple un ressort, qui contraint le levier 464 dans la position où la première extrémité est saillante par rapport au fond 450 du coulisseau mené 106.

Pour permettre à un technicien de déplacer le coulisseau mené 106 même en l'absence de la barre d'assemblage 108, le système de sécurité 460 comporte une poignée de sécurité 466 qui est fixée sur l'arbre de sécurité 468. Ainsi, une rotation de la poignée de sécurité 466 entraîne la rotation de l'arbre de sécurité 468 et donc le basculement du levier 464 et le soulèvement de la dent 462.

Sur chaque coulisseau 104, 106, la barre d'assemblage 108 est mise en appui, d'une part, contre une face du châssis 202, 402 dudit coulisseau 104, 106 qui est parallèle au plan du rail 102a-b correspondant audit coulisseau 104, 106, et, d'autre part, contre une face du châssis 202, 402 dudit coulisseau 104, 106 qui est perpendiculaire à la direction longitudinale du rail 102a-b correspondant audit coulisseau 104, 106.

Pour le coulisseau menant 104, la barre d'assemblage 108 est en appui contre le fond 250 et contre une paroi du châssis 202 qui englobe ici le système d'entraînement 204 et qui est perpendiculaire au fond 250 et localement à la direction longitudinale du premier rail 102a.

Pour le coulisseau mené 106, la barre d'assemblage 108 est en appui contre le fond 450 et contre une paroi 452 présentant une première face perpendiculaire au fond 450 et localement à la direction longitudinale du deuxième rail 102b.

Le premier système de fixation 206 comporte ici un taraudage 220 et un plot 218 avec une tête 222 qui sont implantés dans le fond 250 et dont les axes sont perpendiculaires au plan du premier rail 102a.

Le premier système complémentaire de fixation 602 comporte un système d'accrochage 700 qui est configuré pour coopérer avec le plot 218 et plus particulièrement la tête 222 et une vis de fixation 702 prévue pour coopérer avec le taraudage 220 lors de la mise en place de la barre d'assemblage 108.

Le système d'accrochage 700 va être décrit à partir de la Fig. 7 qui est une vue partiellement éclatée. Le système d'accrochage 700 comporte :
- deux mâchoires 704a-b, chacune étant montée mobile en rotation sur le châssis 606 autour d'un axe de serrage parallèle au plan du premier rail 102a entre une position de serrage dans laquelle les mâchoires 704a-b enserrent la tête 222 et une position libre dans laquelle les mâchoires 704a-b libèrent la tête 222,
- pour chaque mâchoire 704a-b, un moyen de rappel, comme par exemple un ressort de torsion, qui contraint ladite mâchoire 704a-b en position de serrage, et
- un système de libération 706 configuré pour, lorsqu'il est activé, faire passer les deux mâchoires 704a-b de la position de serrage à la position libre.

Le système de libération 706 comporte :
- une poignée 708, et
- un levier 710 monté mobile en rotation autour d'un axe parallèle au plan du premier rail 102a, dont une première extrémité est articulée sur la poignée 708, et dont une deuxième extrémité porte, pour chaque mâchoire 704a-b, un bras 712a-b, et pour la tête 222, une tige poussoir 714.

Lorsque la poignée 708 est actionnée par un technicien, la poignée 708 tire sur le levier 710 pour le faire basculer et les bras 712a-b viennent pousser les mâchoires 704a-b pour les faire passer en position libre, puis la tige poussoir 714 appuie sur la tête 222 pour la repousser et l'extraire des mâchoires 704a-b.

Chaque mâchoire 704a-b prend ici la forme d'un V dont l'une des branches enserre la tête 222 et dont l'autre est poussée par le bras 712a-b.

Pour permettre le retour en position initiale lorsque la poignée 708 est relâchée, des moyens de rappel, ici deux ressorts de compression 716, sont configurés pour repousser la deuxième extrémité du levier 710 en prenant appui contre le châssis 606.

Le deuxième système de fixation 406 comporte ici une pluralité d'orifices 418 (ici trois) et une tige filetée 420, qui sont disposées sur la première face de la paroi 452. Les axes des orifices 418 et de la tige filetée 420 sont localement parallèles à la direction du deuxième rail 102b. La tête de la tige filetée 420 est accessible depuis l'autre côté de la paroi 452.

Le deuxième système complémentaire de fixation 604 comporte :
- pour chaque orifice 418, une protubérance 608 prévue pour s'insérer dans l'orifice 418 lors de la mise en place de la barre d'assemblage 108, et
- un trou taraudé 620 prévu pour recevoir la tige filetée 420 lors de la mise en place de la barre d'assemblage 108.

Dans le mode de réalisation de l'invention présenté sur la Fig. 4A, la première face de la paroi 452 présente un plateau 454 qui est monté mobile en translation sur la paroi 452 du coulisseau mené 106 selon une direction localement perpendiculaire à la direction longitudinale du deuxième rail 102b et localement parallèle au plan du deuxième rail 102b.

Un tel agencement permet un ajustement de la position du deuxième système de fixation 406 lors de la mise en place de la barre d'assemblage 108.

La Fig. 4B montre un agencement permettant la mise en oeuvre d'une liaison glissière entre la paroi 452 et le plateau 454. La paroi 452 présente un ensemble de rainures 456 et le plateau 454 présente au moins une poutrelle 458 qui s'insère dans les rainures 456.

Pour permettre le passage de la tige filetée 420 à travers la paroi 452 et son déplacement avec le plateau 454, la paroi 452 présente un trou oblong 470.

Pour permettre un retour automatique du plateau 454 dans sa position d'origine, des moyens de rappel 472 du type plot montés sur ressort sont prévus.

Bien que le premier système de fixation 206, les premiers éléments de guidage 302 et le premier système d'actionnement 208 soient décrits en relation avec le coulisseau menant 104, et que le deuxième système de fixation 406, les deuxièmes éléments de guidage 502 et le deuxième système d'actionnement 408 soient décrits en relation avec le coulisseau mené 106, il est possible de les intervertir ou que les deux coulisseaux 104 et 106 comportent des éléments identiques.

Afin de permettre un déplacement de l'outil le long de la barre d'assemblage 108, celle-ci est équipée d'un système de déplacement 804 sur lequel le chariot 801 est fixé et qui est configuré pour déplacer ledit chariot 801 le long de la barre d'assemblage 108, c'est à dire entre les deux rails 102a-b.

Le système de déplacement 804 comporte ici un moteur 806 et un axe fileté 808 entraîné en rotation par le moteur 806.

La Fig. 8B montre le chariot 801 en coupe. Le chariot 801 comporte une base 810 qui est fixée sur le système de déplacement 804, et ici plus particulièrement sur l'axe fileté 808, un support mobile 812 qui est monté mobile en rotation sur la base 810 autour d'un axe outil 814 parallèle à la direction longitudinale de la barre d'assemblage 108, des moyens d'arrêt 816, ici des boulons, qui permettent de bloquer la rotation du support mobile 812, et le premier système d'assemblage 802 qui est arrangé sur le support mobile 812.

La Fig. 11 montre en coupe le premier système d'assemblage 802 et le deuxième système d'assemblage 902.

Le premier système d'assemblage 802 et le deuxième système d'assemblage 902 forment une liaison en queue d'aronde avec des profils complémentaires en trapèze. Le premier système d'assemblage 802 comporte ainsi une rainure en trapèze 818 et en V selon une direction localement perpendiculaire au plan des rails 102a-b et des perçages taraudés 820 dont les axes sont localement perpendiculaires aux plans des rails 102a-b.

Le module support 110 comporte une base 908 et un tiroir 910 monté mobile en translation sur la base 908 selon une direction perpendiculaire au plan des rails 102a-b.

Le deuxième système d'assemblage 902 est disposé sur la base 908 et comporte ici une nervure en trapèze 904 qui s'emboîte dans la rainure en trapèze 818 et pour chaque perçage taraudé 820, une vis de montage 906.

Les deuxièmes éléments de fixation 1002 sont disposés sur le tiroir 910.

Les deuxièmes éléments de fixation 1002 comprennent ici un système de crochet et vis.

La base 908 présente ici une douille 1010 dans laquelle le nez de l'outil est positionné.

Le guidage du tiroir 910 sur la base 908 est assuré ici par une liaison en queue d'aronde 1004 formant une liaison glissière selon une direction perpendiculaire au plan des rails 102a-b.

Le déplacement du tiroir 910 par rapport à la base 908 est réalisé par des moyens d'actionnement 912 comme par exemple ici des vérins.

Pour assurer un positionnement correct de l'outil par rapport à la surface 52, le module support 110 comporte deux capteurs de pression 1006a-b alignés l'un avec l'autre selon la direction longitudinale des rails 102a-b. Les capteurs de pression 1006a-b sont montés sur un coulisseau 1008 monté sur ressort et mobile en translation sur le tiroir 910 selon une direction perpendiculaire au plan des rails 102a-b. Les capteurs de pression 1006a-b permettent d'identifier le décalage angulaire entre l'outil et la surface de la pièce

Les capteurs de pression 1006a-b sont par exemple du type capteur de déplacement par contact ou de mesure de distance par exemple par laser.

Le porte-outil 100 comporte une unité de contrôle 56 qui commande le système d'entraînement 204, le système de déplacement 804 et les moyens d'actionnement 912 et qui reçoit des informations des deux capteurs de pression 1006a-b.

Après la mise en place du porte-outil 100, le fonctionnement est le suivant :
- le tiroir 910 est abaissé jusqu'à ce que le nez de l'outil placé dans la douille 1010 soit en contact avec la surface 52 par actionnement des moyens d'actionnement 912 par l'unité de contrôle 56,
- les moyens d'arrêt 816 sont déverrouillés afin de libérer la rotation du support mobile 812,
- en fonction de la différence entre les pressions mesurées par les capteurs de pression 1006a-b, l'unité de contrôle 56 commande l'activation du système d'entraînement 204 afin de déplacer le coulisseau menant 104 et le coulisseau mené 106,
- lors du déplacement du coulisseau menant 104 et du coulisseau mené 106, le support mobile 812 pivote autour de l'axe outil 814, en prenant appui sur le nez de l'outil ce qui déplace les capteurs de pression 1006a-b,
- le déplacement du coulisseau menant 104 et du coulisseau mené 106 est poursuivi dans le sens approprié pour obtenir des pressions mesurées égales,
- les moyens d'arrêt 816 sont alors verrouillés afin de bloquer la rotation du support mobile 812,
- l'outil est alors positionné perpendiculairement à la surface 52.

## Revendications

1. Porte-outil (100) destiné à se fixer sur une surface (52) d'une pièce (50) et à porter un outil, ledit porte-outil (100) comportant :
- un premier rail (102a) et un deuxième rail (102b) parallèles et comportant chacun des premiers éléments de fixation (112) configurés pour assurer la fixation dudit rail (102a-b) sur la surface (52),
- un coulisseau menant (104) comportant des premiers éléments de guidage (302) qui présentent une position de guidage dans laquelle lesdits premiers éléments de guidage (302) sont configurés pour assurer une liaison glissière entre le coulisseau menant (104) et le premier rail (102a), un système d'entraînement (204) configuré pour assurer le déplacement du coulisseau menant (104) le long du premier rail (102a), et un premier système de fixation (206),
- un coulisseau mené (106) comportant des deuxièmes éléments de guidage (502) qui présentent une position de guidage dans laquelle lesdits deuxièmes éléments de guidage (502) sont configurés pour assurer une liaison glissière entre le coulisseau mené (106) et le deuxième rail (102b) et un deuxième système de fixation (406),
- une barre d'assemblage (108) dont une première extrémité porte un premier système complémentaire de fixation (602) destiné à coopérer avec le premier système de fixation (206) de manière à former une fixation amovible entre eux, dont une deuxième extrémité porte un deuxième système complémentaire de fixation (604) destiné à coopérer avec le deuxième système de fixation (406) de manière à former une fixation amovible entre eux, un chariot (801) présentant un premier système d'assemblage (802), et un système de déplacement (804) sur lequel le chariot (801) est fixé et qui est configuré pour déplacer ledit chariot (801) le long de la barre d'assemblage (108), et
- un module de support (110) comportant des deuxièmes éléments de fixation (1002) assurant la fixation de l'outil, et un deuxième système d'assemblage (902) destiné à coopérer avec le premier système d'assemblage (802) de manière à former une fixation amovible entre eux,
où chacun des premier et deuxième éléments de guidage (302, 502) comportent au moins trois roues à gorge (304a-d, 504a-d), dont au moins deux sont disposées le long d'un premier bord longitudinal du premier rail (102a), respectivement deuxième rail (102b), et dont au moins une est disposée le long d'un deuxième bord longitudinal du premier rail (102a), respectivement deuxième rail (102b),
le porte-outil (100) étant **caractérisé en ce que** pour chacun des premier et deuxième éléments de guidage (302, 502), au moins un groupe parmi lesdites au moins deux roues à gorge ou ladite au moins une roue à gorge est déplaçable de la position de guidage à une position de libération dans laquelle ledit au moins un groupe est à distance du rail (102a-b), et où le coulisseau (104, 106) correspondant comporte un système d'actionnement (208, 408) configuré pour assurer le passage dudit au moins un groupe de la position de guidage à la position de libération, et inversement,
où pour chacun des premier et deuxième éléments de guidage (302, 502), le système d'actionnement (208, 408) comporte une poignée (210, 410) pouvant être déplacée d'une position de verrouillage à une position de déverrouillage et, pour les roues à gorge (304c-d, 504c-d) déplaçables, un système de décalage (306, 506) mobile entre une position de guidage dans laquelle lesdites roues à gorge (304c-d, 504c-d) sont en position de guidage et une position de libération dans laquelle lesdites roues à gorge (304c-d, 504c-d) sont en position de libération, et un système de transmission (214, 514) configuré pour commander le passage du système de décalage (306, 506) de la position de guidage à la position de libération lorsque la poignée (210, 410) est manoeuvrée de la position de verrouillage à la position de déverrouillage et inversement, et où pour l'un des premier et deuxième éléments de guidage (302, 502), la poignée (210) prend la forme d'une gâchette (212), **en ce que** le système de transmission (214) prend la forme d'un câble reliant la gâchette (212) au système de décalage (306), et **en ce que** le système de décalage (306) comporte :
- un actionneur (308) avec une tige (310),
- un bras de décalage (307) présentant une première extrémité reliée au câble (214) et sur laquelle l'actionneur (308) est monté mobile en rotation, et une deuxième extrémité montée mobile en rotation sur le châssis (202),
- un premier bras (312) monté mobile en rotation sur le châssis (202) et articulé sur la tige (310),
- un deuxième bras (314) dont l'une des extrémités est montée articulée sur le premier bras (312), et
- un troisième bras (316) monté mobile en rotation sur le châssis (202) et portant la roue à gorge (304c), et où l'autre extrémité du deuxième bras (314) est montée articulée sur le troisième bras (316).

2. Porte-outil (100) selon la revendication 1, **caractérisé en ce que** pour l'autre des premier et deuxième éléments de guidage (302, 502), la poignée (410) est un bouton rotatif (412), **en ce que** le système de transmission (514) est un arbre mobile en rotation autour de son axe, dit axe de transmission (514a), solidaire du bouton rotatif (412) et du deuxième système de décalage (506), et **en ce que** le système de décalage (506) comporte :
- un premier moyeu (516c) mobile en rotation sur le châssis (402) et fixé à l'arbre (514) et dont l'axe de rotation est désaxé par rapport à son centre et confondu avec l'axe de transmission (514a), la roue à gorge (504c) étant montée mobile en rotation sur le premier moyeu (516c),
- un deuxième moyeu (516d) mobile en rotation sur le châssis (402) et dont l'axe de rotation est désaxé par rapport à son centre, la roue à gorge (504d) étant montée mobile en rotation sur le deuxième moyeu (516d),
- un arbre fixe (520) autour duquel le deuxième moyeu (516d) est monté mobile en rotation, et
- une bielle (518) dont la première extrémité est montée mobile en rotation sur le premier moyeu (516c) autour d'un axe parallèle à l'axe de transmission (514a), et dont la deuxième extrémité est montée mobile en rotation sur le deuxième moyeu (516d) autour d'un axe parallèle à l'axe de transmission (514a).

3. Porte-outil (100) selon l'une des revendications 1 ou 2, **caractérisé en ce que** le deuxième rail (102b) présente des fentes (416), **en ce que** le coulisseau mené (106) comporte une dent (462) et un système de sécurité (460) qui est configuré pour assurer, lorsque la barre d'assemblage (108) est libérée dudit coulisseau mené (106), l'insertion de la dent (462) dans une fente (416) et assurer, lorsque la barre d'assemblage (108) est fixée audit coulisseau mené (106) ou lorsqu'un technicien l'active volontairement, l'extraction de la dent (462) de la fente (416).

4. Porte-outil (100) selon la revendication 3, **caractérisé en ce que** le système de sécurité (460) comporte :
- un arbre de sécurité (468) monté mobile en rotation sur le coulisseau mené (106) autour d'un axe parallèle au plan du deuxième rail (102b),
- un levier (464) fixé sur l'arbre de sécurité (468) dont une première extrémité est saillante par rapport au coulisseau mené (106) et une deuxième extrémité sur laquelle la dent (462) est articulée,
- un moyen de rappel qui contraint le levier (464) dans la position où la première extrémité est saillante par rapport au coulisseau mené (106), et
- une poignée de sécurité (466) fixée sur l'arbre de sécurité (468).

5. Porte-outil (100) selon l'une des revendications 1 à 3, **caractérisé en ce qu'**au moins un parmi le premier (206) ou le deuxième (406) système de fixation comporte un plot (218) avec une tête (222) dont l'axe est perpendiculaire au plan du rail (102a-b), et **en ce que** le premier (602), respectivement le deuxième (604), système complémentaire de fixation comporte un système d'accrochage (700) qui comporte :
- deux mâchoires (704a-b), chacune étant montée mobile en rotation sur le châssis (606) autour d'un axe de serrage parallèle au plan du rail (102a-b) entre une position de serrage dans laquelle les mâchoires (704a-b) enserrent la tête (222) et une position libre dans laquelle les mâchoires (704a-b) libèrent la tête (222),
- pour chaque mâchoire (704a-b), un moyen de rappel qui contraint ladite mâchoire (704a-b) en position de serrage, et
- un système de libération (706) configuré pour faire passer les deux mâchoires (704a-b) de la position de serrage à la position libre.

6. Porte-outil (100) selon l'une des revendications 1 à 5, **caractérisé en ce qu'**au moins un parmi le premier (206) ou le deuxième (406) système de fixation comporte une pluralité d'orifices (418) et une tige filetée (420) dont les axes sont parallèles à la direction du rail (102a-b), et **en ce que** le premier (602), respectivement le deuxième (604), système complémentaire de fixation comporte :
- pour chaque orifice (418), une protubérance (608) prévue pour s'insérer dans l'orifice (418), et
- un trou taraudé (620) prévu pour recevoir la tige filetée (420).

7. Porte-outil (100) selon la revendication 6, **caractérisé en ce que** la pluralité d'orifices (418) et la tige filetée (420) sont disposées sur un plateau (454) qui est monté mobile en translation sur le coulisseau (104, 106) selon une direction perpendiculaire à la direction longitudinale du rail (102a-b) et parallèle au plan du rail (102a-b).

8. Porte-outil (100) selon l'une des revendications 1 à 7, **caractérisé en ce que** le chariot (801) comporte une base (810) fixée sur le système de déplacement (804), un support mobile (812) monté mobile en rotation sur la base (810) autour d'un axe outil (814) parallèle à la direction longitudinale de la barre d'assemblage (108), des moyens d'arrêt (816) permettant de bloquer la rotation du support mobile (812), et le premier système d'assemblage (802) arrangé sur le support mobile (812).

9. Porte-outil (100) selon la revendication 8, **caractérisé en ce que** le module support (110) comporte une base (908) portant le deuxième système d'assemblage (902), un tiroir (910) monté mobile en translation sur la base (908) selon une direction perpendiculaire au plan des rails (102a-b), des moyens d'actionnement (912) assurant un déplacement du tiroir (910) sur la base (908), et **en ce que** les deuxièmes éléments de fixation (1002) sont disposés sur le tiroir (910).

10. Porte-outil (100) selon la revendication 9, **caractérisé en ce que** le module support (110) comporte deux capteurs de pression (1006a-b) alignés l'un avec l'autre selon la direction longitudinale des rails (102a-b), **en ce que** les capteurs de pression (1006a-b) sont montés sur un coulisseau (1008) monté sur ressort et mobile en translation sur le tiroir (910) selon une direction perpendiculaire au plan des rails (102a-b), et **en ce que** le porte-outil (100) comporte une unité de contrôle (56) qui commande le système d'entraînement (204) et les moyens d'actionnement (912) et qui reçoit des informations des deux capteurs de pression (1006a-b).

## Patentansprüche

1. Werkzeugträger (100), der dazu bestimmt ist, an einer Fläche (52) eines Bauteils (50) befestigt zu werden und ein Werkzeug zu tragen, wobei der Werkzeugträger (100) aufweist:
- eine erste Schiene (102a) und eine zweite Schiene (102b), die parallel sind und je erste Befestigungselemente (112) aufweisen, die konfiguriert sind, die Befestigung der Schiene (102a-b) an der Fläche (52) zu gewährleisten,
- ein treibendes Gleitstück (104), das erste Führungselemente (302), die eine Führungsstellung haben, in der die ersten Führungselemente (302) konfiguriert sind, eine Gleitschienenverbindung zwischen dem treibenden Gleitstück (104) und der ersten Schiene (102a) zu gewährleisten, ein Antriebssystem (204), das konfiguriert ist, die Verschiebung des treibenden Gleitstücks (104) entlang der ersten Schiene (102a) zu gewährleisten, und ein erstes Befestigungssystem (206) aufweist,
- ein angetriebenes Gleitstück (106), das zweite Führungselemente (502), die eine Führungsstellung haben, in der die zweiten Führungselemente (502) konfiguriert sind, eine Gleitschienenverbindung zwischen dem angetriebenen Gleitstück (106) und der zweiten Schiene (102b) zu gewährleisten, und ein zweites Befestigungssystem (406) aufweist,
- eine Montagestange (108), von der ein erstes Ende ein erstes komplementäres Befestigungssystem (602) trägt, das dazu bestimmt ist, mit dem ersten Befestigungssystem (206) zusammenzuwirken, um zwischen ihnen eine lösbare Befestigung zu bilden, von der ein zweites Ende ein zweites komplementäres Befestigungssystem (604) trägt, das dazu bestimmt ist, mit dem zweiten Befestigungssystem (406) zusammenzuwirken, um zwischen ihnen eine lösbare Befestigung zu bilden, einen Schlitten (801), der ein erstes Montagesystem (802) hat, und ein Verschiebesystem (804), an dem der Schlitten (801) befestigt ist und das konfiguriert ist, den Schlitten (801) entlang der Montagestange (108) zu verschieben, und
- ein Trägermodul (110), das zweite Befestigungselemente (1002) aufweist, die die Befestigung des Werkzeugs gewährleisten, und ein zweites Montagesystem (902), das dazu bestimmt ist, mit dem ersten Montagesystem (802) zusammenzuwirken, um zwischen ihnen eine lösbare Befestigung zu bilden,
wobei jedes der ersten und zweiten Führungselemente (302, 502) mindestens drei Rillenräder (304a-d, 504a-d) aufweist, von denen mindestens zwei entlang eines ersten Längsrands der ersten Schiene (102a) bzw. zweiten Schiene (102b) angeordnet sind, und von denen mindestens eins entlang eines zweiten Längsrands der ersten Schiene (102a) bzw. zweiten Schiene (102b) angeordnet ist,
wobei der Werkzeugträger (100) **dadurch gekennzeichnet ist, dass** für jedes der ersten und zweiten Führungselemente (302, 502) mindestens eine Gruppe unter den mindestens zwei Rillenrädern oder das mindestens eine Rillenrad von der Führungsstellung in eine Freigabestellung verschiebbar ist, in der die mindestens eine Gruppe in Abstand zur Schiene (102a-b) ist, und wobei das entsprechende Gleitstück (104, 106) ein Betätigungssystem (208, 408) aufweist, das konfiguriert ist, den Übergang der mindestens einen Gruppe von der Führungsstellung in die Freigabestellung und umgekehrt zu gewährleisten, wobei für jedes der ersten und zweiten Führungselemente (302, 502) das Betätigungssystem (208, 408) einen Griff (210, 410), der von einer Verriegelungsstellung in eine Entriegelungsstellung verschoben werden kann, und für die verschiebbaren Rillenräder (304c-d, 504cd) ein Versatzsystem (306, 506), das zwischen einer Führungsstellung, in der die Rillenräder (304c-d, 504c-d) in Führungsstellung sind, und einer Freigabestellung beweglich ist, in der die Rillenräder (304c-d, 504c-d) in Freigabestellung sind, und ein Übertragungssystem (214, 514) aufweist, das konfiguriert ist, den Übergang des Versatzsystems (306, 506) von der Führungsstellung in die Freigabestellung zu steuern, wenn der Griff (210, 410) von der Verriegelungsstellung in die Entriegelungsstellung und umgekehrt betätigt wird, und
wobei für eines der ersten und zweiten Führungselemente (302, 502) der Griff (210) die Form eines Auslösers (212) annimmt,
dass das Übertragungssystem (214) die Form eines Kabels annimmt, das den Auslöser (212) mit dem Versatzsystem (306) verbindet, und dass das Versatzsystem (306) aufweist:
- einen Stellantrieb (308) mit einer Stange (310),
- einen Versatzarm (307), der ein erstes Ende, das mit dem Kabel (214) verbunden ist und auf das der Stellantrieb (308) drehbeweglich montiert ist, und ein zweites Ende hat, das drehbeweglich auf das Gestell (202) montiert ist,
- einen ersten Arm (312), der drehbeweglich auf das Gestell (202) montiert und an die Stange (310) angelenkt ist,
- einen zweiten Arm (314), von dem eines der Enden gelenkig an den ersten Arm (312) montiert ist, und
- einen dritten Arm (316), der drehbeweglich auf das Gestell (202) montiert ist und das Rillenrad (304c) trägt, und wobei das andere Ende des zweiten Arms (314) gelenkig an den dritten Arm (316) montiert ist.

2. Werkzeugträger (100) nach Anspruch 1, **dadurch gekennzeichnet, dass** für das andere der ersten und zweiten Führungselemente (302, 502) der Griff (410) ein Drehknopf (412) ist, dass das Übertragungssystem (514) eine um ihre Achse, Übertragungsachse (514a) genannt, die fest mit dem Drehknopf (412) und dem zweiten Versatzsystem (506) verbunden ist, drehbewegliche Welle ist, und dass das Versatzsystem (506) aufweist:
- eine erste Nabe (516c), die auf dem Gestell (402) drehbeweglich und an der Welle (514) befestigt ist, und deren Drehachse bezüglich ihrer Mitte axial verschoben ist und mit der Übertragungsachse (514a) zusammenfällt, wobei das Rillenrad (504c) drehbeweglich auf die erste Nabe (516c) montiert ist,
- eine zweite Nabe (516d), die auf dem Gestell (402) drehbeweglich und deren Drehachse bezüglich ihrer Mitte axial verschoben ist, wobei das Rillenrad (504d) drehbeweglich auf die zweite Nabe (516d) montiert ist,
- eine ortsfeste Welle (520), um die die zweite Nabe (516d) drehbeweglich montiert ist, und
- eine Schubstange (518), deren erstes Ende um eine Achse parallel zur Übertragungsachse (514a) drehbeweglich auf die erste Nabe (516c) montiert ist, und deren zweites Ende um eine Achse parallel zur Übertragungsachse (514a) drehbeweglich auf die zweite Nabe (516d) montiert ist.

3. Werkzeugträger (100) nach einem der Ansprüche 1 oder 2, **dadurch gekennzeichnet, dass** die zweite Schiene (102b) Schlitze (416) hat, und dass das angetriebene Gleitstück (106) einen Zahn (462) und ein Sicherheitssystem (460) aufweist, das konfiguriert ist, wenn die Montagestange (108) vom angetriebenen Gleitstück (106) freigegeben wird, die Einführung des Zahns (462) in einen Schlitz (416) zu gewährleisten, und, wenn die Montagestange (108) am angetriebenen Gleitstück (106) befestigt ist oder wenn ein Techniker sie absichtlich aktiviert, das Herausziehen des Zahns (462) aus dem Schlitz (416) zu gewährleisten.

4. Werkzeugträger (100) nach Anspruch 3, **dadurch gekennzeichnet, dass** das Sicherheitssystem (460) aufweist:
- eine Sicherheitswelle (468), die um eine Achse parallel zur Ebene der zweiten Schiene (102b) drehbeweglich auf das angetriebene Gleitstück (106) montiert ist,
- einen an der Sicherheitswelle (468) befestigten Hebel (464), von dem ein erstes Ende bezüglich des angetriebenen Gleitstücks (106) vorsteht, und ein zweites Ende, an das der Zahn (462) angelenkt ist,
- eine Rückstelleinrichtung, die den Hebel (464) in die Stellung zwingt, in der das erste Ende bezüglich des angetriebenen Gleitstücks (106) vorsteht, und
- einen Sicherheitsgriff (466), der an der Sicherheitswelle (468) befestigt ist.

5. Werkzeugträger (100) nach einem der Ansprüche 1 bis 3, **dadurch gekennzeichnet, dass** mindestens eines vom ersten (206) oder zweiten (406) Befestigungssystem einen Block (218) mit einem Kopf (222) aufweist, dessen Achse lotrecht zur Ebene der Schiene (102a-b) ist, und dass das erste (602) bzw. das zweite (604) komplementäre Befestigungssystem ein Einhängesystem (700) aufweist, das aufweist:
- zwei Backen (704a-b), die je um eine Klemmachse parallel zur Ebene der Schiene (102a-b) zwischen einer Klemmstellung, in der die Backen (704a-b) den Kopf (222) einklemmen, und einer freien Stellung drehbeweglich auf das Gestell (606) montiert sind, in der die Backen (704a-b) den Kopf (222) freigeben,
- für jede Backe (704a-b) eine Rückstelleinrichtung, die die Backe (704a-b) in die Klemmstellung zwingt, und
- ein Freigabesystem (706), das konfiguriert ist, die zwei Backen (704a-b) von der Klemmstellung in die freie Stellung übergehen zu lassen.

6. Werkzeugträger (100) nach einem der Ansprüche 1 bis 5, **dadurch gekennzeichnet, dass** mindestens eines vom ersten (206) oder zweiten (406) Befestigungssystem eine Vielzahl von Öffnungen (418) und eine Gewindestange (420) aufweist, deren Achsen parallel zur Richtung der Schiene (102a-b) sind, und dass das erste (602) bzw. zweite (604), komplementäre Befestigungssystem aufweist:
- für jede Öffnung (418) einen Vorsprung (608), der vorgesehen ist, um sich in die Öffnung (418) einzufügen, und
- eine Gewindeloch (620), das vorgesehen ist, um die Gewindestange (420) aufzunehmen.

7. Werkzeugträger (100) nach Anspruch 6, **dadurch gekennzeichnet, dass** die Vielzahl von Öffnungen (418) und die Gewindestange (420) auf einer Platte (454) angeordnet sind, die auf das Gleitstück (104, 106) gemäß einer Richtung lotrecht zur Längsrichtung der Schiene (102a-b) und parallel zur Ebene der Schiene (102a-b) translationsbeweglich montiert ist.

8. Werkzeugträger (100) nach einem der Ansprüche 1 bis 7, **dadurch gekennzeichnet, dass** der Schlitten (801) eine am Verschiebungssystem (804) befestigte Basis (810), einen um eine Werkzeugachse (814) parallel zur Längsrichtung der Montagestange (108) auf die Basis (810) drehbeweglich montierten beweglichen Träger (812), Arretiereinrichtungen (816), die es ermöglichen, die Drehung des beweglichen Trägers (812) zu blockieren, und das erste Montagesystem (802) enthält, das auf dem beweglichen Träger (812) angeordnet ist.

9. Werkzeugträger (100) nach Anspruch 8, **dadurch gekennzeichnet, dass** das Trägermodul (110) eine Basis (908), die das zweite Montagesystem (902) trägt, einen Schieber (910), der gemäß einer Richtung lotrecht zur Ebene der Schienen (102a-b) translationsbeweglich auf die Basis (908) montiert ist, Betätigungseinrichtungen (912), die eine Verschiebung des Schiebers (910) auf der Basis (908) gewährleisten, aufweist, und dass die zweiten Befestigungselemente (1002) auf dem Schieber (910) angeordnet sind.

10. Werkzeugträger (100) nach Anspruch 9, **dadurch gekennzeichnet, dass** das Trägermodul (110) zwei Drucksensoren (1006a-b) aufweist, die zueinander fluchtend gemäß der Längsrichtung der Schienen (102a-b) angeordnet sind, dass die Drucksensoren (1006a-b) auf ein Gleitstück (1008) montiert sind, das federnd gelagert und gemäß einer Richtung lotrecht zur Ebene der Schienen (102a-b) auf dem Schieber (910) translationsbeweglich ist, und dass der Werkzeugträger (100) eine Steuereinheit (56) aufweist, die das Antriebssystem (204) und die Betätigungseinrichtungen (912) steuert und die Informationen von den zwei Drucksensoren (1006a-b) empfängt.

## Claims

1. Tool-holder (100) intended to be fixed to a surface (52) of a workpiece (50) and to carry a tool, said tool-holder (100) including:
- a first rail (102a) and a second rail (102b) that are parallel and each of which includes first fixing elements (112) configured for fixing said rail (102a-b) to the surface (52),
- a driving slide (104) including first guiding elements (302) that have a guiding position in which said first guiding elements (302) are configured to provide a sliding connection between the driving slide (104) and the first rail (102a), a drive system (204) configured to move the driving slide (104) along the first rail (102a), and a first fixing system (206),
- a driven slide (106) including second guiding elements (502) that have a guiding position in which said second guiding elements (502) are configured to provide a sliding connection between the driven slide (106) and the second rail (102b) and a second fixing system (406),
- an assembly bar (108) a first end of which carries a first complementary fixing system (602) intended to cooperate with the first fixing system (206) to form a removable fixing between them, a second end of which carries a second complementary fixing system (604) intended to cooperate with the second fixing system (406) to form a removable fixing between them, a carriage (801) having a first assembly system (802), and a movement system (804) on which the carriage (801) is fixed and that is configured to move said carriage (801) along the assembly bar (108), and
- a support module (110) including second fixing elements (1002) for fixing the tool and a second assembly system (902) intended to cooperate with the first assembly system (802) to form a removable fixing between them,
wherein each of the first and second guiding elements (302, 502) includes at least three grooved wheels (304a-d, 504a-d), at least two or which are disposed along a first longitudinal edge of the first rail (102a), respectively second rail (102b), and at least one of which is disposed along a second longitudinal edge of the first rail (102a), respectively second rail (102b),
the tool-holder (100) being **characterized in that**
for each of the first and second guiding elements (302, 502), at least one group from said at least two grooved wheels or said at least one grooved wheel is movable from the guiding position to a releasing position in which said at least one group is at a distance from the rail (102a-b), and where the corresponding slide (104, 106) includes an actuating system (208, 408) configured to move said at least one group from the guiding position to the releasing position and vice versa,
where for each of the first and second guiding elements (302, 502), the actuating system (208, 408) includes a handle (210, 410) that can be moved from a locking position to an unlocking position and, for the movable grooved wheels (304c-d, 504c-d), an offsetting system (306, 506) mobile between a guiding position in which said grooved wheels (304c-d, 504c-d) are in the guiding position and a releasing position in which said grooved wheels (304c-d, 504c-d) are in the releasing position, and a transmission system (214, 514) configured to drive the movement of the offsetting system (306, 506) from the guiding position to the releasing position when the handle (210, 410) is manoeuvred from the locking position to the unlocking position and vice versa, and
where for one of the first and second guiding elements (302, 502), the handle (210) takes the form of a trigger (212), **in that** the transmission system (214) takes the form of a cable connecting the trigger (212) to the offsetting system (306), and **in that** the offsetting system (306) includes:
- an actuator (308) with a rod (310),
- an offsetting arm (307) having a first end connected to the cable (214) and on which the actuator (308) is rotatedly mounted and a second end rotatably mounted on the chassis (202),
- a first arm (312) rotatably mounted on the chassis (202) and articulated to the rod (310),
- a second arm (314) one end of which is mounted on and articulated to the first arm (312), and
- a third arm (316) rotatably mounted on the chassis (202) and carrying the grooved wheel (304c), and wherein the other end of the second arm (314) is mounted on and articulated to the third arm (316).

2. Tool-holder (100) according to claim 1, **characterized in that** for the other of the first and second guiding elements (302, 502), the handle (410) is a rotary knob (412), **in that** the transmission system (514) is a shaft rotatable about its axis, referred to as the transmission axis (514a), fastened to the rotary knob (412) and the second offsetting system (506), and **in that** the offsetting system (506) includes:
- a first hub (516c) rotatable on the chassis (402) and fixed to the shaft (514) and the rotation axis of which is offset relative to its centre and coincides with the transmission axis (514a), the grooved wheel (504c) being rotatably mounted on the first hub (516c),
- a second hub (516d) rotatable on the chassis (402) and the rotation axis of which is offset relative to its centre, the grooved wheel (504d) being rotatably mounted on the second hub (516d),
- a fixed shaft (520) around which the second hub (516d) is rotatably mounted, and
- a link (518) the first end of which is rotatably mounted on the first hub (516c) to rotate about an axis parallel to the transmission axis (514a) and the second end of which is mounted on the second hub (516d) to rotate about an axis parallel to the transmission axis (514a).

3. Tool-holder (100) according to any one of claims 1 or 2, **characterized in that** the second rail (102b) has slots (416), **in that** the driven slide (106) includes a tooth (462) and a security system (460) that is configured to ensure the insertion of the tooth (462) in a slot (416) when the assembly bar (108) is released from said driven slide (106) and to ensure the extraction of the tooth (462) from the slot (416) when the assembly bar (108) is fixed to said driven slide (106) or when a technician intentionally activates it.

4. Tool-holder (100) according to claim 3, **characterized in that** the security system (460) includes:
- a security shaft (468) rotatably mounted on the driven slide (106) to rotate about an axis parallel to the plane of the second rail (102b),
- a lever (464) fixed to the security shaft (468) a first end of which projects relative to the driven slide (106) and a second end to which the tooth (462) is articulated,
- return means that urge the lever (464) into the position in which the first end projects relative to the driven slide (106), and
- a security handle (466) fixed to the security shaft (468).

5. Tool-holder (100) according to any one of claims 1 to 3, **characterized in that** at least one among the first fixing system (206) or the second fixing system (406) includes a stud (218) with a head (222) the axis of which is perpendicular to the plane of the rail (102a-b) and **in that** the first complementary fixing system (602), respectively the second complementary fixing system (604), includes an attachment system (700) which includes:
- two jaws (704a-b), each being mounted on the chassis (606) to rotate about a clamping axis parallel to the plane of the rail (102a-b) between a clamping position in which the jaws (704a-b) grip the head (222) and a free position in which the jaws (704a-b) release the head (222),
- for each jaw (704a-b), return means that urge said jaw (704a-b) into the clamping position, and
- a release system (706) configured to move the two jaws (704a-b) from the clamping position to the free position.

6. Tool-holder (100) according to any one of claims 1 to 5, **characterized in that** at least one among the first fixing system (206) or the second fixing system (406) includes a plurality of orifices (418) and a threaded rod (420) the axes of which are parallel to the direction of the rail (102a-b) and **in that** the first complementary fixing system (602), respectively the second complementary fixing system (604), includes:
- for each orifice (418), a protuberance (608) adapted to be inserted in the orifice (418), and
- a threaded hole (620) adapted to receive the threaded rod (420).

7. Tool-holder (100) according to claim 6, **characterized in that** the plurality of orifices (418) and the threaded rod (420) are disposed on a plate (454) that is mounted on the slide (104, 106) and mobile in translation in a direction perpendicular to the longitudinal direction of the rail (102a-b) and parallel to the plane of the rail (102a-b).

8. Tool-holder (100) according to any one of Claims 1 to 7, **characterized in that** the carriage (801) includes a base (810) fixed to the movement system (804), a mobile support (812) mounted on the base (810) to rotate about a tool axis (814) parallel to the longitudinal direction of the assembly bar (108), stop means (816) for stopping the rotation of the mobile support (812), and the first assembly system (802) arranged on the mobile support (812).

9. Tool-holder (100) according to Claim 8, **characterized in that** the support module (110) includes a base (908) carrying the second assembly system (902), a drawer (910) mounted on the base (908) to move in translation in a direction perpendicular to the plane of the rails (102a-b), actuating means (912) for moving the drawer (910) on the base (908), and **in that** the second fixing elements (1002) are disposed on the drawer (910).

10. Tool-holder (100) according to Claim 9, **characterized in that** the support module (110) includes two pressure sensors (1006a-b) aligned with each other in the longitudinal direction of the rails (102a-b), **in that** the pressure sensors (1006a-b) are mounted on a spring-mounted slide (1008) mobile in translation on the drawer (910) in a direction perpendicular to the plane of the rails (102a-b), and **in that** the tool-holder (100) includes a control unit (56) that controls the driving system (204) and the actuating means (912) and that receives information from the two pressure sensors (1006a-b).
